# EUROPEAN PATENT SPECIFICATION

(11) **EP 4 330 523 B1**
(45) Date of publication and mention of the grant of the patent: **19.02.2025**
(21) Application number: 22710740.6
(22) Date of filing: 08.03.2022
(51) Int. Cl.: F01N 3/021, F01N 3/10, F01N 3/20, F01N 9/00, F01N 13/00

(54) **EXHAUST GAS AFTERTREATMENT SYSTEM AND METHOD**
ABGASNACHBEHANDLUNGSSYSTEM UND -VERFAHREN
SYSTÈME ET PROCÉDÉ DE POST-TRAITEMENT DE GAZ D'ÉCHAPPEMENT

(30) Priority: 30.04.2021 GB 202106257
(43) Date of publication of application: 06.03.2024
(73) Proprietor: AGCO International GmbH, 8212 Neuhausen am Rheinfall (CH)
(72) Inventor: IIVONEN, Markus, 37240 Linnavuori (FI); SIHVOLA, Juho, 37240 Linnavuori (FI); HAPPONEN, Matti, 37240 Linnavuori (FI); HEIKKILA, Juha, 37240 Linnavuori (FI)
(74) Representative: AGCO Intellectual Property Department
(86) International application number: PCT/IB2022/052049
(87) International publication number: WO 2022/229720

(56) References cited:
- US-A1- 2013 327 018
- US-B2- 8 539 756
- US-B2- 9 115 631

## Description

### FIELD OF THE INVENTION

The present invention relates to an exhaust gas aftertreatment system and method for reducing harmful emissions from internal combustion engines.

### TECHNICAL BACKGROUND

There is a rising demand for cleaner and more efficient internal combustion engines, especially diesel engines. In response to these demands, new standards continue to be proposed for reduction of exhaust emissions and in particular reduction of particulate and NOₓ(NO and NO₂) emissions. Exhaust aftertreatment systems (EAT) in engine exhaust systems have been developed to meet these standards.

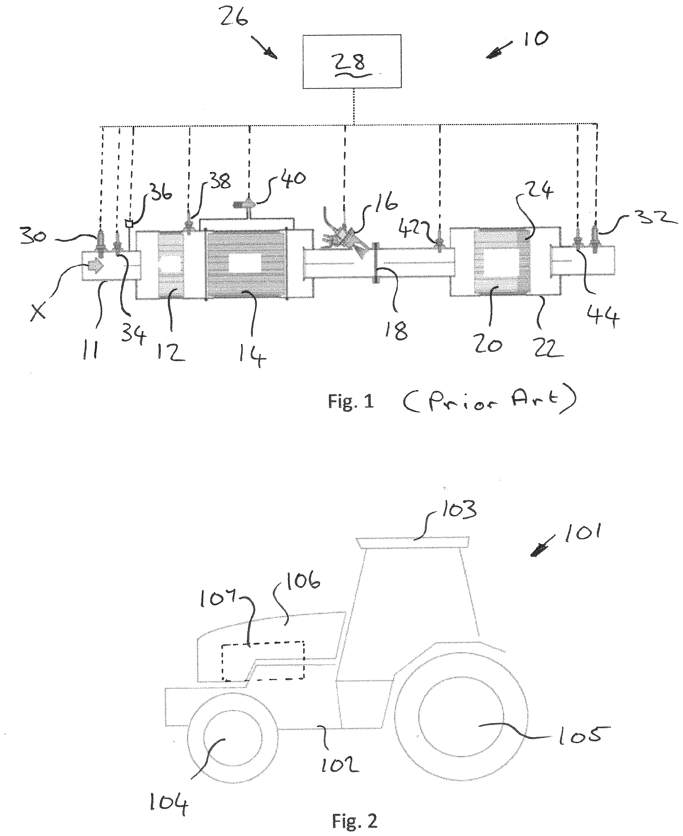

Figure 1 illustrates schematically a known EAT system 10 incorporated into an exhaust system 11 for a diesel engine. Exhaust gases from the diesel engine flow through the exhaust system in the direction of arrow X, which indicates the direction of flow of the gases from upstream to downstream. The EAT system 10 includes a diesel oxidation catalyst (DOC) 12 and a diesel particulate filter (DPF) 14 to reduce particulate mass and number emissions. The DPF may be a catalysed soot filter (CSF) in which the DPF has a catalytic coating typically of precious metal. Downstream of the DOC and DPF is a selective catalytic reduction (SCR) system for NOₓ reduction. The SCR system includes a dosing module 16 for introducing a diesel exhaust fluid (DEF) in to the exhaust flow, a mixer 18 for mixing the DEF in the exhaust gas and a SCR catalyst 20 in a SCR unit 22 downstream of the mixer. The DEF is a reducing agent which reacts in the SCR catalyst 20 to reduce NOₓ levels in the exhaust. Urea (which may be a urea water mixture) is commonly used as the DEF. Urea vaporises in the exhaust gases, decomposing to produce ammonia (NH₃) and carbon dioxide (CO₂). The NH₃ reacts with the SCR catalyst to convert NOₓ and NH₃ into nitrogen gas (N₂) and water vapour (H₂O). As is known in the art, the SCR system may also comprise an ammonia slip catalyst (ASC) 24 for oxidising ammonia (NH₃) in order to remove excess levels of NH₃ not fully utilised in the SCR process from the exhaust gases. The ASC is conveniently incorporated in the SCR unit 22 downstream of the SCR catalyst 20. The DOC and DPF are also relevant for proper functioning of the SCR process. They oxidize NO to NO₂, therefore increasing the NO₂/NOₓ ratio. This improves efficiency of NOₓ conversion in the SCR process, provided the ratio does not significantly exceed 50/50.

The EAT system 10 includes an electronic control system 26 including one or more electronic control units (ECU), indicated schematically at 28 in Figure 1. The, or each, ECU comprises programmable processing means and memory and is configured and programmed to control and regulate operation of the EAT system in accordance with a number of pre-defied protocols depending on the operating conditions. The electronic control system 26 is typically part of an engine management system. The functions of the ECU 28 may be carried out by a single ECU or by number of separate ECUs interconnected as part of a network, which may be a CAN bus system, for example.

The electronic control system 26 also includes a number of sensors for monitoring various operating parameters of the EAT system. These include:
- an upstream NOₓ sensor 30 for sensing levels of NOₓ in the exhaust gases upstream of the DOC 12;
- a downstream NOₓ sensor 32 for sensing levels of NOₓ in the exhaust gases downstream of the SCR unit 22;
- a first temperature sensor 34 for sensing the exhaust gas temperature (EGT) upstream of the DOC 12;
- a first pressure sensor 36 for sensing the exhaust back pressure upstream of the DOC 12;
- a second temperature sensor 38 for sensing the EGT between the DOC 12 and the DPF 14;
- a differential pressure sensor 40 for measuring the pressure difference in the exhaust gasses across the DPF 14;
- a third temperature sensor 42 for sensing the EGT proximal to the inlet to the SCR unit 22; and
- a fourth temperature sensor 44 for sensing the EGT downstream of the SCR unit 22.

The sensors provide inputs for use by the ECU 28 in regulating operation of the EAT system in a variety of operating conditions. Control of the EAT system is carried out using a combination of mathematical modelling to predict operating conditions and parameters at various locations within the system and closed loop feedback control, both using inputs from the various sensors. Inputs from other sensors associated with the engine and/or the exhaust gas system upstream of the EAT system may also be utilised. These may provide data relating to engine state, speed, load and temperatures, for example, as inputs to the EAT control system.

During operation, the DPF 14 may become filled by particulates (referred to herein as soot loading) which can affect correct operation of the engine and EAT system. Excess soot is oxidised in a process known as regeneration. Soot is oxidised by NO₂ reduction with the DPF in a temperature range in the order of 300-500 degC. This occurs during normal operation of the vehicle and is therefore termed passive regeneration. However, if the soot loading becomes too high, a more aggressive regeneration is required in which the soot is oxidised at a DPF temperature in excess of 500 degC. This is termed active regeneration as the process is actively triggered when the soot loading in the DPF exceeds a predetermined limit. For regeneration purposes, the temperature of the DPF is determined principally using the second temperature sensor 38.

It is known to monitor soot loading of the DPF using two approaches. In a first method, monitoring of the soot loading in the DPF is carried out by the ECU 28 using a model based approach in which three EAT models are used:
- an engine raw emissions model (ERE) which predicts the concentrations of different exhaust components, e.g. soot and NOₓ (NO and NO₂), depending on operating conditions;
- a DOC model which further predicts the effects of the DOC 12 on the exhaust gases, including separate concentrations for NO and NO₂; and
- a DPF model which uses inputs from the ERE and DOC models along with different sensor values to determine the amount of soot stored in the DPF 14 and separate concentrations for NO and NO₂.

A further sensor based monitoring of the soot loading in the DPF 14 is also carried out using inputs from, amongst other things, the DPF pressure differential sensor 40, the EGT measured downstream of the DOC by second temperature sensor 38, the EGT upstream of the SCR unit 22 measured by third temperature sensor 42, and the soot loading as modelled by the DPF model. This method compares the measured differential pressure over the DPF catalyst against a threshold value. If the sensor value exceeds the threshold value, this may trigger an active regeneration of the DPF.

Dosing of the DEF is controlled by the ECU 28 and may be controlled using a model-based DEF dosing control strategy. DEF dosing is allowed only when the engine is running and the DEF dosing strategy is adjusted according to the particular operating state of the engine. The main target of the dosing control is to reach the required tailpipe emissions of NOₓ while minimizing NH₃ slip and excessive use of DEF.

The SCR DEF dosing control model utilizes in particular the two NOₓ sensors 30, 32 and the third and fourth temperature sensors 42, 44, located up and downstream of the SCR unit 22 to provide temperature data. Chemical reactions for the NOₓ components (NO and NO₂) in the EAT system are different. Therefore accurate modelling of NOₓ conversion requires differentiation between NO and NO₂. The upstream NOₓ sensor 30 cannot differentiate between NO and NO₂. However, the DOC and DPF models provide separate concentrations for NO and NO₂ which are used as input for the SCR model. Accordingly, accurate modelling of the DOC and DPF are required both for monitoring the soot loading of the DPF and DEF dosing control.

US 9, 115, 631 B2 discloses a further example of a known exhaust gas aftertreatment system for a diesel engine having a SCR system downstream of a DOC and a DPF.

A problem with known EAT systems is the amount of space that is required to accommodate the system on a vehicle. This is a particular issue for agricultural vehicles such as tractors where it is becoming more difficult to find space for an exhaust aftertreatment system in addition to a simultaneous need to accommodate an increasing number of other systems and components that customers require.

US 8, 539, 756 B2 discloses an exhaust gas aftertreatment system according to the precharacterizing portion of claim 1.

It is an objective of the present invention to provide an alternative EAT system comprising an oxidation catalyst, a diesel particulate filter, and a selective catalytic reduction system which occupies less space than the known EAT systems.

It is a further objective of the invention to provide an alternative method of operating an EAT system comprising an oxidation catalyst, a diesel particulate filter, and a selective catalytic reduction system which enables the EAT system to occupy less space than the known EAT systems.

### SUMMARY OF THE INVENTION

According to a first aspect of the invention, there is provided an exhaust gas aftertreatment (EAT) system as set out in claim 1. Further optional features of the EAT system are set out in the claims dependant on claim 1.

In the EAT system according to the first aspect of the invention, the OC and PF are positioned adjacent one another providing a shorter package for the OC and PF than in the known system where the OC and PF are spaced apart to enable the pressure difference across the PF and the EGT between the OC and PF to be measured directly.

The EAT system is preferably provided on a vehicle or machine which may be an off-road vehicle or machine. The EAT system may be provided on an agricultural vehicle or machine, such as a tractor, combine harvester or the like, or on an industrial or construction vehicle or machine (which may be mobile or static), or on a generator.

The PF may have a catalytic coating and may be a CSF.

The EAT system may be configured to receive exhaust gases from a diesel engine. In which case, the OC may be a diesel oxidation catalyst (DOC) and the PF may be a Diesel Particulate Filter (DPF). Alternatively, the EAT system may be configured to receive exhaust gases from an internal combustion engine which burns an alternative fuel such as hydrogen. In this case, the OC and PF may be adapted to the type of fuel burned.

The EAT system may also comprise a mixer for mixing the EF in the exhaust gases downstream of the EF dosing module and upstream of the SCR catalyst.

The SCR system may comprise an ammonia slip catalyst (ASC). The ASC may be provided as a separate catalytic coating zone after the SCR catalyst coating in an SCR unit or it may be provided in a separate unit downstream of the SCR.

In accordance with a second aspect of the invention, there is provided a method of controlling an EAT system according to the first aspect of the invention as set out in claim 6. Further optional features of the method are set out in the claims dependent on claim 6.

The method may comprise subtracting the modelled pressure drop from the measured pressure drop to derive the pressure drop across the PF. In other words, the pressure drop occurring in any part of the system between the first and second measurement positions outside of the PF is modelled and subtracted from the measured pressure drop.

The method may comprise mathematically modelling the temperature of the exhaust gases entering or in the PF. Where the EAT system has an electronic control system including at least one programmable electronic control unit (ECU) configured and programmed to control and regulate operation of the EAT system in accordance with a number of pre-defied protocols depending on the operating conditions using a combination of mathematical modelling and closed loop feedback control, the control system may include a mathematical model for predicting soot loading of the PF and the method may comprise using the modelled temperature value as an input to the PF predicted soot loading model.

### BRIEF DESCRIPTION OF THE DRAWINGS

Embodiments of the invention will now be described, by way of example only, with reference to the remaining accompanying drawings, in which:
Figure 2 is a schematic illustration of an agricultural vehicle in the form of a tractor comprising an EAT system in accordance with the invention;
Figure 3 illustrates schematically an EAT system in accordance with a first embodiment of the invention; and,
Figure 4 illustrates schematically an EAT system in accordance with a second embodiment of the invention.

The drawings are provided by way of reference only and will be acknowledged as not necessarily to scale. Like reference numbers are used to represent the same features, or features which perform substantially the same function, in each of the embodiments.

### DETAILED DESCRIPTION OF THE INVENTION

Figure 2 illustrates schematically an agricultural machine 101, especially in the form of a tractor. The agricultural machine 101 comprises a chassis 102, a cab 103, a front axle 104 and a rear axle 105. The agricultural machine has an engine compartment 106 housing an internal combustion engine (indicated schematically at 107) which selectively provides drive to the front and rear axles 104, 105. The internal combustion engine 107 in this example is specifically a diesel engine which burns diesel fuel with atmospheric air and produces power and waste gases. The waste gases are commonly referred to as exhaust gases and are rich in particulates and nitrous oxides NO and NO₂, referred to collectively as NOₓ. In an alternative embodiment, the engine may be configured to burn other types of fuel such as hydrogen, for example.

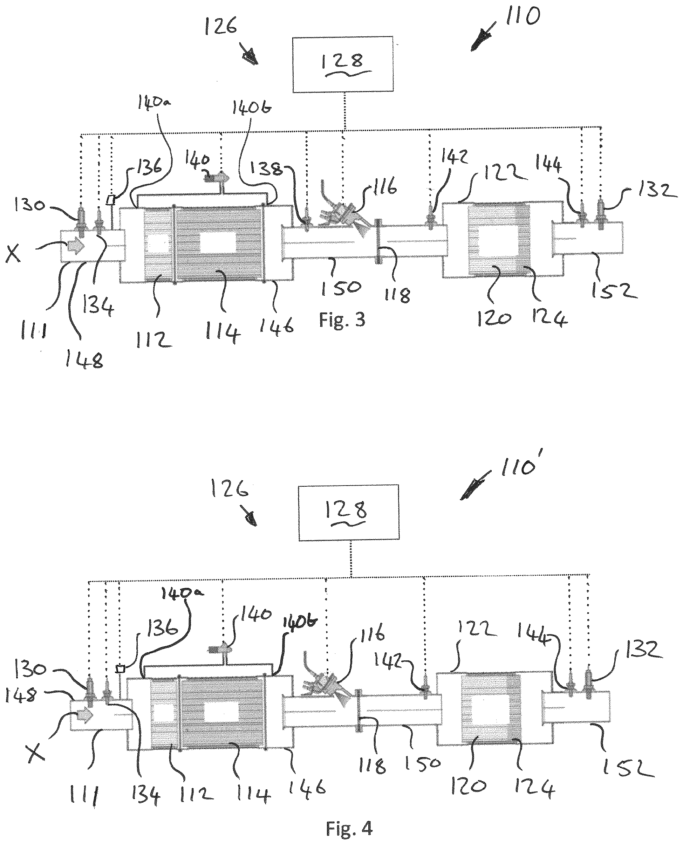

Figure 3 illustrates schematically an embodiment of an EAT system 110 in accordance with an aspect of the invention which is incorporated into part of an exhaust system 111 for the agricultural machine 101. Exhaust gases enter the exhaust system 111 from the diesel engine 107 in the direction of arrow X, which indicates the direction of flow of gases through the exhaust system 111. The arrow X indicates a direction from upstream to downstream.

The EAT system 110 is provided for reducing particulate and NOₓ emissions in the exhaust gases emitted to atmosphere. The EAT system is similar to that of the known system described above in relation to Figure 1 and includes a DOC 112 and a DPF 114 downstream of the DOC. The DOC and DPF are configured to reduce particulate mass and number emissions. The DPF may have a catalytic coating and may be a CSF in which the DPF is coated with precious metal. Downstream of the DOC and DPF is an SCR system for NOₓ reduction. The SCR system includes a dosing module 116 for introducing a DEF into the exhaust flow, a mixer 118 for mixing the DEF in the exhaust gas and a SCR catalyst 120 downstream of the DEF dosing module and the mixer. The DEF is a reducing agent which reacts on a catalytic coating in the SCR unit 120 to reduce NOₓ in the exhaust gases. The DEF may be urea or urea-water solution which vaporizes and decomposes to produce ammonia (NH₃) and carbon dioxide (CO₂). The NH₃ reacts on the catalytic coating in the SCR to convert NOₓ and NH₃ into nitrogen gas (N₂) and water vapour (H₂O). The SCR catalyst 120 is provided in a SCR unit 122. The SCR system also includes an ammonia slip catalyst (ASC) 124 for oxidising NH₃ in order to remove excess levels of NH₃ not fully utilised in the SCR process from the exhaust gases. The ASC may be provided as a separate catalytic coating zone after the SCR catalyst coating 120 in the SCR unit 122 or it may be provided in a separate unit downstream of the SCR unit.

The EAT system 110 includes an electronic control system 126 including one or more electronic control units (ECU), indicated schematically at 128 in Figure 3. The, or each, ECU comprises programmable processing means and memory and is configured and programmed to control and regulate operation of the EAT system in accordance with a number of pre-defied protocols depending on the operating conditions. The electronic control system 126 is typically part of an engine management system. The functions of the ECU 128 may be carried out by a single ECU or by number of separate ECUs interconnected as part of a network, which may be a CAN bus system, for example.

The electronic control system 126 also includes a number of sensors for monitoring various operating parameters of the EAT system. These include:
- an upstream NOₓ sensor 130 for sensing levels of NOₓ in the exhaust gases upstream of the DOC 112;
- a downstream NOₓ sensor 132 for sensing levels of NOx in the exhaust gases downstream of the SCR unit 122;
- a first temperature sensor 134 for sensing the EGT upstream of the DOC 112;
- a first pressure sensor 136 for sensing exhaust back pressure upstream of the DOC 112;
- a second temperature sensor 138 for sensing the EGT proximal an outlet from the DPF 114;
- a differential pressure sensor 140 for measuring the pressure difference in the exhaust gasses across the DOC 112 and the DPF 114;
- a third temperature sensor 142 for sensing the EGT proximal to the inlet to the SCR unit 122; and
- a fourth temperature sensor 144 for sensing the EGT downstream of the SCR unit 122.

The EAT system 110 according to the first embodiment is similar the prior art EAT system 10 illustrated in Figure 1 and described above, except that the sensor layout is modified to enable the DOC 112 to be positioned closer to the DPF 114 with minimal spacing between them. This reduces the length of the DOC and DPF package. The sensor layout is modified such that the second temperature sensor 138 is moved downstream of the DPF and the pressure differential sensor 140 configured to measure the pressure differential across the combination of the DOC and DPF between a first measurement position 140a upstream of the DOC 112 and a second measurement position 140b downstream of the DPF 114. As illustrated, the DOC 112 and DPF 114 may be located in a common housing 146. A spacing in the region of 5 mm to 15 mm, and more preferably in the region of 10 mm, is provided between the DOC 112 and DPF 114 to allow for tolerances. The DPF 114 may be removable to allow for it to be taken out for cleaning and/or replacement.

Exhaust gases are directed from the engine into the common housing 146 through a first exhaust conduit section 148. The upstream NOₓ sensor 130 and the first temperature sensor 134 are located between the engine and the DOC 112. They can be located in the first exhaust conduit section 148 as shown. Alternatively, one or both could be located in an inlet chamber of the DOC 112. In an embodiment, exhaust gases exiting the DPF 114 and the housing 146 are directed to the SCR unit 122 through a second or intermediate exhaust conduit section 150. The second and third temperature sensors 138, 142, the DEF dosing module 116, and the mixer 118 are all mounted to the intermediate exhaust conduit section 150. The second temperature sensor 138 is located proximal the outlet of the DPF 114 and housing 146, upstream of the DEF dosing module 116 and the mixer 118 and could be mounted to an outlet end of the DPF 114. The third temperature sensor 142 is located proximal to the inlet to the SCR unit 122. In an embodiment, the exhaust gases exiting the SCR unit 122 are directed to atmosphere through a third exhaust conduit section or tailpipe 152. The fourth temperature sensor 144 and the downstream NOₓ sensor 132 are both mounted to the tailpipe 152 close to the SCR unit 122. The fourth temperature sensor 144 and the downstream NOₓ sensor are typically mounted close together. Whilst the fourth temperature sensor 144 is shown as being positioned upstream of the downstream NOₓ sensor 132, this order can be reversed.

The DOC 112, DPF 114, SCR catalyst 120, and ASC 124 can be of any suitable types known in the art and so will not be described in detail.

The change in sensor layout to enable the DOC and DPF to be positioned closer together requires a modification in the control system and methods of controlling the EAT system.

In general, the electronic control system 126 is constructed and functions in a similar manner to that of the prior art control system 26 as described above, to which the reader should refer. Accordingly, the sensors provide inputs for use by the ECU 128 in regulating operation of the EAT system in a variety of operating conditions. Control of the EAT system is carried out using a combination of mathematical modelling to predict operating conditions at various locations within the system and closed loop feedback control, both using inputs from the various sensors. Inputs from other sensors associated with the engine and or exhaust gas system upstream of the EAT system may also be utilised. These may provide data relating to engine state, speed, load and temperatures, for example, as inputs to the EAT control system.

As in the prior art EAT system, monitoring of the soot loading in the DPF is carried out using a model based approach utilising three EAT models:
- an engine raw emissions model (ERE) which predicts the concentrations of different exhaust components, e.g. soot and NOₓ (NO and NO₂), depending on operating conditions;
- a DOC model which further predicts the effects of the DOC on the exhaust gases, including separate concentrations for NO and NO₂; and
- a DPF model which uses inputs from the ERE and DOC models along with different sensor values to determine the amount of soot stored in the DPF and separate concentrations for NO and NO₂.

A "sensor based" monitoring of the soot loading in the DPF 114 is also carried out. In the prior art system, the sensor based monitoring compares a measured differential pressure across the DPF catalyst against a threshold value. However, the modified sensor layout in the EAT system 110 does not allow direct measurement of the pressure differential across the DPF. To compensate for this, the EAT modelling includes an additional model to predict the pressure drop occurring in any part of the system between the first measurement position 140a and the second measurement position 140b but outside of the DPF. Typically this would require modelling a pressure drop occurring between the first measurement position 140a and the inlet face of the DPF 114 (including the pressure drop across the DOC 112) and modelling of a pressure drop occurring between the outlet of the DPF and the second measurement position 140b. The output from this model is used together with the measured pressure drop across both the DOC and DPF obtained from the differential pressure sensor 140 to derive a pressure drop across the DPF. For example, the modelled pressure drop can be subtracted from the pressure drop measured by the pressure differential sensor 140 to derive the pressure drop across the DPF. This derived value for the pressure drop across the DPF is used as part of the sensor based monitoring of the soot loading in the DPF in place of the directly measure pressure differential used in the prior art method. The derived value for the pressure across the DPF and the threshold value are compared periodically. If the derived pressure value exceeds the threshold value, this may trigger an active regeneration of the DPF. The threshold value may be obtained from a look up table or a model of predicated pressure value for the operating conditions.

A further input required for secondary monitoring of the soot loading of the DPF is the EGT of the gas entering the DPF. Since this also cannot be measured directly with the modified sensor layout, the EAT modelling is further modified to generate a modelled temperature value. This might be calculated from the EGT measured at the first temperature sensor 134, using a thermal model of the DOC to predict the DOC outlet temperature. Alternatively, the EGT of the gas entering the DPF can be calculated using the EGT measured by the first and second temperature sensors 134, 138, taking into account relevant effects such as heat transfer and thermal losses to the ambient, e.g. allowing for the higher heat capacity between the first and second temperature sensors 134,138. The modelled temperature value can also be used as an input to the DPF model and can also be used to control the temperature of the DPF during regeneration, especially active regeneration. Indeed, various models which form part of the EAT control system may require recalibration and/or additional modelling to take account of the fact that the second temperature sensor 138 is measuring the EGT downstream of the DPF.

Figure 4 illustrates a further embodiment of the EAT system 110' according to the invention. This system is substantially the same as the embodiment 110 described above in relation to Figure 3 except that it comprises only one intermediate temperature sensor 142 for sensing the EGT between the DPF 114 and the SCR unit 122. In the embodiment of Figure 4, the temperature sensor 138 immediately downstream of the DPF 114 is omitted. The EAT system 110' is operated and controlled in a similar manner to the previous embodiment 110 except that the control system is modified to take account of the fact that the EGT is only being measured in three places. This may require the creation of one or more mathematical models to generate one or more virtual temperature signals based on the measured EGT inputs from the three available temperature sensors 134, 142, 144 and taking into account relevant effects such as heat transfer, thermal losses to the ambient and chemical reactions. In addition, or alternatively, this may require recalibration of the various EAT models and/or control protocols as required to take account of the reduced number of measured EGT inputs. In a further alternative arrangement, which can be adopted in either of the embodiments shown in Figures 3 and 4, the SCR outlet temperature sensor 144 can be left out and replaced by a modelled value.

The EAT system 110' of Figure 4, and the modified version of the EAT system 110 in Figure 3 with no SCR outlet temperature sensor 144, have the benefit of reduced cost as fewer temperature sensors are used. However, measured EGT values are more accurate than modelled values.

Whilst embodiments of an EAT system and method in accordance with the invention have been described in relation to a mobile agricultural machine 101 in the form of a tractor, it should be understood that the inventive EAT system and method can be applied to a range of vehicles and machines (whether static or mobile) which use an internal combustion engine and especially a diesel engine. This includes, without limitation, tracked vehicles, combine harvesters, industrial and construction vehicles, and generators. Furthermore, whilst the invention has been described in relation to an EAT configured to receive exhaust gases from a diesel engine, the principles may be applied where the EAT system is used in respect of an engine which burns an alternative fuel such as hydrogen. In this case, the EAT may have an oxidation catalyst (OC) upstream of and adjacent to a particulate filter (PF) which are adapted to the type of fuel burned in place of the DOC and the DPF. Typically, the OC and PF would be constructed and function in similar manner to a DOC and DPF but would be configured for use with the particular type of fuel. Similarly, the DEF may be referred to simply as an exhaust fluid (EF) or a reducing agent where the engine is not a diesel engine.

The invention is not limited to the embodiments or examples described herein and may be modified or adapted without departing from the scope of the present invention as set out in the appended claims. For example, it should be understood that whilst the relative positions of the DOC, DPF, DEF dosing module, and SCR catalyst will remain the same, the physical layout of the EAT system may be varied. For example, the DOC, DPF, DEF dosing module, and SCR catalyst could all be contained in a common housing unit without the need for a smaller diameter intermediate exhaust conduit section. The required sensors will be mounted to the housing unit in the same relative positions as in the disclosed embodiments.

## Claims

1. An exhaust gas aftertreatment (EAT) system (110; 110') for receiving exhaust gases from an internal combustion engine (107), the EAT system comprising:
a particulate filter (PF) (114);
an oxidation catalyst (OC) (112) upstream of and adjacent to the PF;
a pressure differential sensor (140) configured to measure a pressure differential between a first measurement position (140a) upstream of the OC and a second measurement position (140b) downstream of the PF and wherein there are no sensors for determining a parameter of the exhaust gases located between the OC and the PF;
**characterized by**:
a selective catalytic reduction (SCR) system downstream of the PF, the SCR system including an exhaust fluid (EF) dosing module (116) for introducing an EF into the exhaust gas flow downstream of the PF and a SCR catalyst (120) downstream of the EF dosing unit;
an upstream NOx sensor (130) for detecting NOx levels in the exhaust gases upstream of the OC;
a downstream NOx sensor (132) for detecting NOx levels in the exhaust gas downstream of the SCR catalyst;
an upstream OC temperature sensor (134) for sensing the exhaust gas temperature (EGT) upstream of the OC; and
at least one intermediate temperature sensor (138, 142) for sensing the EGT downstream of the PF and upstream of the SCR catalyst;
and wherein:
a) the EAT system has two intermediate temperature sensors, one (138) downstream of the PF and upstream of the EF dosing module and one (142) downstream of the EF dosing module and upstream of the SCR catalyst; or
b) the EAT system has a single intermediate temperature sensor (142) located downstream of the EF dosing module and upstream of the SCR catalyst.

2. An EAT system (110; 110') as claimed in claim 1, wherein the OC (112) and PF (114) are provided as an integral module.

3. An EAT system (110; 110') as claimed in claim 1 or claim 2, wherein there is a gap of no more than 15 mm between the OC (112) and the PF (114), or a gap of no more than 12 mm between the OC (112) and the PF (114), or a gap of no more than 10 mm between the OC (112) and the PF (1140, or a gap of no more than 8 mm between the OC (112) and the PF (114), or a gap of no more than 5 mm between the OC (112) and the PF (114).

4. An EAT system (110; 110') as claimed in any one of claims 1 to 3, the EAT system having an electronic control system (126) including at least one programmable electronic control unit (ECU) (128) configured and programmed to control and regulate operation of the EAT system in accordance with a number of pre-defined protocols depending on the operating conditions using a combination of mathematical modelling and closed loop feedback control.

5. An EAT system (110; 110') as claimed in claim 4, programmed and configured to carry out the method as claimed in any one of claims 6 to 13.

6. A method of controlling an EAT system (110; 110') as claimed in any one of claims 1 to 5, the method comprising: measuring an actual pressure drop between the first measurement position (140a) upstream of the OC and the second measurement position (140b) downstream of the PF (114) using the differential pressure sensor (140), mathematically modelling a pressure drop occurring in the system between the first measurement position (140a) and an inlet to PF (114) and between an outlet of the PF and the second measurement position (140b), and determining the pressure drop across the PF using the measured pressure drop and the modelled pressure drop.

7. A method as claimed in claim 6, the method comprising subtracting the modelled pressure drop from the measured pressure drop to determine the pressure drop across the PF (114).

8. A method as claimed in claim 6 or claim 7, the method comprising mathematically modelling the temperature of the exhaust gases entering the PF (114).

9. A method as claimed in claim 8, wherein the EAT system (110; 110') is a system as claimed in claim 5, the electronic control system (126) including a mathematical model for predicting soot loading of the PF (114), and wherein the method comprises using the modelled temperature value as an input to the PF predicted soot loading model.

## Patentansprüche

1. Abgasnachbehandlungssystem (exhaust gas aftertreatment system, EAT-System) (110; 110') zum Empfangen von Abgasen von einer Brennkraftmaschine (107), wobei das EAT-System aufweist:
einen Partikelfilter (PF) (114);
einen stromaufwärts des PFs angeordneten und diesem benachbarten Oxidationskatalysator (OC) (112);
einen Differenzdrucksensor (140), der ausgebildet ist, um einen Differenzdruck zwischen einer stromaufwärts des OCs angeordneten ersten Messposition (140a) und einer stromabwärts des PFs angeordneten zweiten Messposition (140b) zu messen, und wobei sich zwischen dem OC und dem PF keine Sensoren zum Bestimmen eines Parameters der Abgase befinden;
**gekennzeichnet durch**
ein stromabwärts des PFs angeordnetes selektives katalytisches Reduktionssystem (selective catalytic reduction system; SCR-System), wobei das SCR-System ein Abgasfluid-Dosierungsmodul (exhaust fluid dosing module, EF-Dosierungsmodul) (116) zum Einleiten eines EFs in den Abgasstrom stromabwärts des PFs und einen stromabwärts der EF-Dosierungseinheit angeordneten SCR-Katalysator (120) beinhaltet;
einen stromaufwärts angeordneten NOx Sensor (130) zum Detektieren von NOx-Niveaus in den Abgasen stromaufwärts des OCs;
einen stromabwärts angeordneten NOx Sensor (132) zum Detektieren von NOx-Niveaus in dem Abgas stromabwärts des SCR-Katalysators;
einen stromaufwärts angeordneten OC-Temperatursensor (134) zum Messen der Abgastemperatur (exhaust gas temperature, EGT) stromaufwärts des OCs; und
mindestens einen Zwischen-Temperatursensor (138, 142) zum Messen der EGT stromabwärts des PFs und stromaufwärts des SCR-Katalysators;
und wobei:
a) das EAT-System zwei Zwischen-Temperatursensoren aufweist, wobei ein Zwischen-Temperatursensor (138) stromabwärts des PFs und stromaufwärts des EF-Dosierungsmoduls angeordnet ist und ein Zwischen-Temperatursensor (142) stromabwärts des EF-Dosierungsmoduls und stromaufwärts des SCR-Katalysators angeordnet ist; oder
b) das EAT-System einen einzigen Zwischen-Temperatursensor (142) aufweist, der stromabwärts des EF-Dosierungsmoduls und stromaufwärts des SCR-Katalysators angeordnet ist.

2. EAT-System (110; 110') nach Anspruch 1, **wobei** der OC (112) und der PF (114) als ein integrales Modul bereitgestellt sind.

3. EAT-System (110; 110') nach Anspruch 1 oder Anspruch 2, **wobei** zwischen dem OC (112) und dem PF (114) eine Lücke von nicht mehr als 15 mm, oder zwischen dem OC (112) und dem PF (114) eine Lücke von nicht mehr als 12 mm, oder zwischen dem OC (112) und dem PF (114) eine Lücke von nicht mehr als 10 mm, oder zwischen dem OC (112) und dem PF (114) eine Lücke von nicht mehr als 8 mm oder zwischen dem OC (112) und dem PF (114) eine Lücke von nicht mehr als 5 mm vorhanden ist.

4. EAT-System (110; 110') nach einem der Ansprüche 1 bis 3, **wobei** das EAT-System ein elektronisches Steuersystem (126) aufweist, das mindestens eine programmierbare elektronische Steuereinheit (electronic control unit, ECU) (128) beinhaltet, die ausgebildet ist und programmiert ist, um unter Verwenden einer Kombination einer mathematischem Modellierung und einer geschlossenen Feedbackschleifen-Steuerung (closed loop feedback control) einen Betrieb des EAT-Systems entsprechend einer Anzahl von vorbestimmten Protokollen in Abhängigkeit von den Betriebsbedingungen zu steuern und zu regulieren.

5. EAT-System (110; 110') nach Anspruch 4, das programmiert und ausgebildet ist, um das Verfahren nach einem der Ansprüche 6 bis 13 auszuführen.

6. Verfahren zum Steuern eines EAT-Systems (110; 110') nach einem der Ansprüche 1 bis 5, **wobei** das Verfahren aufweist: ein Messen eines aktuellen Druckabfalls zwischen der ersten Messposition (140a) stromaufwärts des OCs und der zweiten Messposition (140b) stromabwärts des PFs (114) unter Verwenden des Differenzdrucksensors (140), ein mathematisches Modellieren eines Druckabfalls, der in dem System zwischen der ersten Messposition (140a) und einem Einlass zu dem PF (114) und zwischen einem Auslass des PFs und der zweiten Messposition (140b) auftritt, und ein Bestimmen des Druckabfalls über den PF unter Verwenden des gemessenen Druckabfalls und des modellierten Druckabfalls.

7. Verfahren nach Anspruch 6, **wobei** das Verfahren ein Subtrahieren des modellierten Druckabfalls von dem gemessenen Druckabfall aufweist, um den Druckabfall über den PF (114) zu bestimmen.

8. Verfahren nach Anspruch 6 oder Anspruch 7, wobei das Verfahren ein mathematisches Modellieren der Temperatur des in den PF (114) eintretenden Abgases aufweist.

9. Verfahren nach Anspruch 8, wobei das EAT-System (110; 110') ein System nach Anspruch 5 ist, wobei das elektronische Steuersystem (126) ein mathematisches Modell zum Vorhersagen einer Ruß-Belastung des PFs (114) umfasst und wobei das Verfahren ein Verwenden der modellierten Temperaturwerte als eine Eingabe in das vorhergesagte PF-Ruß-Belastungs-Modell aufweist.

## Revendications

1. Dispositif de post-traitement de gaz d'échappement (EAT) (110 ; 110') destiné à recevoir des gaz d'échappement à partir d'un moteur à combustion interne (107), le dispositif EAT comprenant :
un filtre à particules (PF) (114) ;
un catalyseur d'oxydation (OC) (112) situé en amont du filtre PF et de manière adjacente à ce dernier ;
un capteur de pression différentielle (140) configuré de manière à mesurer une différence de pression entre une première position de mesure (140a) en amont du catalyseur OC et une seconde position de mesure (140b) en aval du filtre PF et dans lequel il n'existe aucun capteur permettant de déterminer un paramètre des gaz d'échappement situés entre le catalyseur OC et le filtre PF ;
**caractérisé par** :
un dispositif de réduction catalytique sélectif (SCR) en aval du filtre PF, le dispositif SCR comportant un module de dosage (116) de fluide d'échappement (EF) destiné à introduire un fluide EF dans l'écoulement de gaz d'échappement en aval du filtre PF et un catalyseur SCR (120) en aval de l'unité de dosage de fluide EF ;
un capteur de NOx (130) en amont afin de détecter des niveaux de NOx dans les gaz d'échappement en amont du catalyseur OC ;
un capteur de NOx (132) en aval afin de détecter des niveaux de NOx dans les gaz d'échappement en aval du catalyseur SCR ;
un capteur de température de catalyseur OC (134) en amont afin de détecter la température de gaz d'échappement (EGT) en amont du catalyseur OC ; et
au moins un capteur de température intermédiaire (138, 142) afin de détecter la température EGT en aval du filtre PF et en amont du catalyseur SCR ;
et dans lequel :
a) le dispositif EAT comporte deux capteurs de température intermédiaire, un premier (138) en aval du filtre PF et en amont du module de dosage de fluide EF et un autre (142) en aval du module de dosage de fluide EF et en amont du catalyseur SCR ; ou
b) le dispositif EAT comporte un seul capteur de température intermédiaire (142) situé en aval du module de dosage de fluide EF et en amont du catalyseur SCR.

2. Dispositif EAT (110 ; 110') selon la revendication 1, dans lequel le catalyseur d'oxydation OC (112) et le filtre à particules PF (114) sont agencés sous la forme d'un module unitaire.

3. Dispositif EAT (110 ; 110') selon la revendication 1 ou 2, dans lequel il existe un espace non supérieur à 15 mm entre le catalyseur OC (112) et le filtre PF (114), ou un espace non supérieur à 12 mm entre le catalyseur OC (112) et le filtre PF (114), ou un espace non supérieur à 10 mm entre le catalyseur OC (112) et le filtre PF (114), ou un espace non supérieur à 8 mm entre le catalyseur OC (112) et le filtre PF (114), ou un espace non supérieur à 5 mm entre le catalyseur OC (112) et le filtre PF (114).

4. Dispositif EAT (110 ; 110') selon l'une quelconque des revendications 1 à 3, le dispositif EAT comprenant un dispositif de commande électronique (126) comportant au moins une unité de commande électronique programmable (ECU) (128) configurée et programmée de manière à commander et à réguler le fonctionnement du dispositif EAT selon un certain nombre de protocoles prédéfinis en fonction des conditions de fonctionnement en utilisant une association de modélisation mathématique et de commande d'asservissement en boucle fermée.

5. Dispositif EAT (110 ; 110') selon la revendication 4, programmé et configuré de manière à mettre en œuvre le procédé selon l'une quelconque des revendications 6 à 13.

6. Procédé de commande d'un dispositif EAT (110 ; 110') selon l'une quelconque des revendications 1 à 5, le procédé comprenant : la mesure d'une perte de charge réelle entre la première position de mesure (140a) en amont du catalyseur OC et la seconde position de mesure (140b) en aval du filtre PF (114) en utilisant le capteur de pression différentielle (140), la modélisation mathématique d'une perte de charge se produisant sur le dispositif entre la première position de mesure (140a) et une entrée du filtre PF (114) et entre une sortie du filtre PF et la seconde position de mesure (140b) et la détermination de la perte de charge à travers le filtre PF en utilisant la perte de charge mesurée et la perte de charge modélisée.

7. Procédé selon la revendication 6, le procédé comprenant la soustraction de la perte de charge modélisée par rapport à la perte de charge mesurée afin de déterminer la perte de charge à travers le filtre PF (114).

8. Procédé selon la revendication 6 ou 7, le procédé comprenant la modélisation mathématique de la température des gaz d'échappement entrant dans le filtre PF (114).

9. Procédé selon la revendication 8, dans lequel le dispositif EAT (110 ; 110') est un dispositif selon la revendication 5, le dispositif de commande électronique (126) comportant un modèle mathématique destiné à prévoir le chargement en suie du filtre PF (114) et dans lequel le procédé comprend l'utilisation de la valeur de température modélisée en tant qu'entrée du modèle de prévision de chargement en suie du filtre PF.
